# NEUE EUROPÄISCHE PATENTSCHRIFT

(11) **EP 1 155 055 B2**
(45) Veröffentlichungstag und Bekanntmachung des Hinweises auf die Entscheidung über den Einspruch: **15.04.2009**
(45) Hinweis auf die Patenterteilung: 16.04.2003
(21) Anmeldenummer: 99962216.0
(22) Anmeldetag: 04.12.1999
(51) Int. Cl.: C08F 14/18, C08F 6/16

(54) **WÄSSRIGE DISPERSIONEN VON FLUORPOLYMEREN**
AQUEOUS DISPERSIONS OF FLUOROPOLYMERS
DISPERSIONS AQUEUSES DE FLUOROPOLYMERES

(30) Priorität: 11.12.1998 DE 19857111
(43) Veröffentlichungstag der Anmeldung: 21.11.2001
(60) Teilanmeldung: 02078858.4
(73) Patentinhaber: Dyneon GmbH & Co. KG, 84504 Burgkirchen (DE)
(72) Erfinder: BLÄDEL, Hermann, D-84547 Emmerting (DE); HINTZER, Klaus, D-84556 Kastl (DE); LÖHR, Gernot, D-84508 Burgkirchen (DE); SCHWERTFEGER, Werner, D-84503 Altötting (DE); SULZBACH, Reinhard, Albert, D-84489 Burghausen (DE)
(74) Vertreter: Kurz, Arnd
(86) Internationale Anmeldenummer: PCT/EP1999/009500
(87) Internationale Veröffentlichungsnummer: WO 2000/035971

(56) Entgegenhaltungen:
- EP-A- 0 014 431
- EP-A- 0 408 363
- EP-A- 0 818 506
- EP-A- 1 209 125
- DE-A- 2 903 981
- US-A- 2 863 889
- US-A- 3 536 643
- US-A- 3 882 153
- US-A- 4 282 162
- US-A- 4 369 266
- US-A- 5 464 897
- EL-AASSER M.S.: 'Methods of Latex Cleaning' SCIENCE AND TECHNOLOGY OF POLYMER COLLOIDS Bd. II, 1983, Seite 422-448

## Beschreibung

Die vorliegende Erfindung betrifft ein Verfahren zur Herstellung von wäßrigen Dispersionen von Fluorpolymeren, die im wesentlichen frei von fluorhaltigen Emulgatoren sind, Dispersionen und deren Verwendung. Unter "im wesentlichen frei" ist ein Gehalt von weniger als 100 ppm, bevorzugt weniger als 50 ppm, besonders bevorzugt weniger als 25 ppm und insbesondere weniger als 5 ppm zu verstehen.

Polyfluorethylendispersionen finden in der Beschichtungsindustrie breite Anwendung, da die Beschichtungen einzigartige anwendungstechnische Eigenschaften, wie zum Beispiel Antihafteigenschaften, gute Witterungsbeständigkeit und Nichtentflammbarkeit, aufweisen. Sie werden hauptsächlich zur Beschichtung von Küchengeräten, chemischen Apparaturen und Glasgeweben eingesetzt. Bei vielen derartigen Anwendungen werden die Dispersionen mit verhältnismäßig hohen Feststoffgehalten, zum Beispiel bis zu 70 Gew.-%, aufgetragen. Diese konzentrierten Dispersionen werden vorwiegend mit nichtionischen Emulgatoren, wie zum Beispiel Alkylarylpolyethoxyalkoholen und Alkylpolyethoxyalkoholen, kolloidchemisch stabilisiert.

Zur Herstellung von Fluorpolymeren gibt es im Prinzip zwei verschiedene Polymerisationsverfahren, nämlich die Suspensionspolymerisation, die ein Polymergranulat ergibt, und andererseits die sogenannte Emulsionspolymerisation, die eine wäßrige kolloidale Dispersion ergibt. Die vorliegende Erfindung betrifft die Emulsionspolymerisation, die so erhaltenen Dispersionen und deren Verwendung.

Bei der Herstellung derartiger Dispersionen gibt es im Prinzip zwei Verfahrensschritte, nämlich die Polymerisation und die Aufkonzentrierung.

Nach dem Verfahren der wäßrigen Emulsionspolymerisation gelangt man erstens zu nicht aus der Schmelze verarbeitbaren Homopolymeren, zum Beispiel PTFE, zweitens zu "modifizierten" Polymeren, zum Beispiel einem Polymer mit mehr als etwa 99 Mol-% Tetrafluorethylen (TFE) und nur einer so geringen Menge an Comonomer(en), daß das Produkt seinen Charakter als "nicht aus der Schmelze verarbeitbar" behält, drittens zu niedermolekularen "Mikropulver"-Dispersionen, die aus der Schmelze verarbeitbar sind, und viertens zu Copolymeren, wie zum Beispiel Fluorthermoplasten oder Fluorelastomeren. Zu den Fluorthermoplasten gehören Copolymere, die überwiegend aus TFE und einer solchen Menge eines oder mehrerer Comonomere, zum Beispiel 1 bis 50, vorzugsweise 1 bis 10, Mol-%. bestehen, daß das Produkt aus der Schmelze verarbeitbar ist. Übliche Fluormonomere sind neben TFE Vinylidenfluorid (VDF), andere fluorierte Olefine, wie zum Beispiel Chlortrifluorethylen (CTFE), insbesondere perfluorierte Olefine mit 2 bis 8 Kohlenstoffatomen, zum Beispiel Hexafluorpropen (HFP), fluorierte Ether, insbesondere perfluorierte Vinylalkylether mit Alkylteilen mit 1 bis 6 Kohlenstoffatomen, zum Beispiel Perfluor(n-propylvinyl)ether (PPVE). Als Comonomere kommen auch nichtfluorierte Olefine in Betracht, zum Beispiel Ethylen und Propylen. Die so erhaltenen Dispersionen von Polymeren, die aus der Schmelze verarbeitbar oder nicht aus der Schmelze verarbeitbar sind, weisen in der Regel einen Feststoffgehalt von 15 bis 30 Gew.-% auf. Daher muß man zur Erzielung des oben genannten hohen Feststoffgehalts für die Anwendung als Beschichtung und vorteilhafterweise auch für die Lagerung und den Transport den Feststoffgehalt durch Aufkonzentrierung erhöhen. Dazu bedient man sich beispielsweise der thermischen Aufkonzentrierung gemäß US-A 3 316 201, der Dekantierung (US-A 3 037 953) und der Ultrafiltration (US-A 4 369 266).

Die bekannte Emulsionspolymerisation erfolgt meistens in einem Druckbereich von 5 bis 30 bar und einem Temperaturbereich von 5 bis 100 °C, wie es beispielsweise in der EP-B 30 663 beschrieben ist. Das Polymerisationsverfahren zur Herstellung von PTFE-Dispersionen entspricht im wesentlichen dem bekannten Verfahren zur Herstellung von feinen Harzpulvern, sogenannter Pastenware (US-A 3 142 665). Das Polymerisationsverfahren zur Herstellung von Copolymeren, wie zum Beispiel Fluorthermoplastdispersionen, entspricht dem Verfahren zur Herstellung dieser Materialien in Form von Schmelz-Pellets.

Bei allen diesen Emulsionspolymerisationen ist ein Emulgator erforderlich, der die Polymerisation nicht durch Kettenübertragung stört. Diese Emulgatoren werden nichttelogene Emulgatoren genannt (US-A 2 559 752). In der Hauptsache verwendet man Perfluoroctansäuren (PFOS, zum Beispiel n-PFOS, CAS-Nr. 335-67-1) in Form von Ammoniumund/oder Alkalisalzen. Bei Verwendung der Abkürzung PFOS im folgenden Text sollen andere fluorierte Emulgatoren jedoch nicht ausgeschlossen sein. Der Gehalt an diesem Emulgator liegt in der Regel im Bereich von 0,02 bis 1 Gew.-%, bezogen auf das Polymer.

Gelegentlich werden andere Fluoremulgatoren eingesetzt.
So wird beispielsweise in der EP-A 822 175 die Verwendung von Salzen von CH₂-haltigen Fluorcarbonsäuren zur Emulsionspolymerisation von TFE beschrieben.
In der WO-A 97/08214 wird die Verwendung von 2-Perfluorhexylethansulfonsäure oder deren Salzen für die TFE-Polymerisation beschrieben.

In der US-A 2 559 752 werden weitere fluorierte Emulgatoren beschrieben, die jedoch wegen ihrer geringen Flüchtigkeit keine weite Verbreitung gefunden haben. Diese Chemikalien können zu einer Verfärbung der Endprodukte bei hohen Verarbeitungstemperaturen führen.

Einer der größten Vorteile von PFOS besteht in ihrer hohen Flüchtigkeit. PFOS ist ein sehr wirksamer Emulgator und wegen ihrer Reaktionsträgheit bei der Polymerisation praktisch unentbehrlich. PFOS ist jedoch nicht biologisch abbaubar und wird neuerdings als umweltgefährdend eingestuft.

Es ist jedoch bekannt, PFOS aus Abgasen abzutrennen (EP 731 081), und außerdem wurden vorteilhafte Verfahren zur Abtrennung von PFOS aus Abwasser vorgeschlagen (in der US-A 4 282 162 und den noch unveröffentlichten, am 2. Juni 1998 hinterlegten deutschen Patentanmeldungen 198 24 614.5 und 198 24 615.3).

Bei den oben aufgeführten Aufkonzentrationstechniken verbleibt die PFOS größtenteils in der Polymerdispersion, selbst bei Ultrafiltration und Abdekantierung mit einem 100fachen Überschuß des nichtionischen Emulgators.

So verbleiben beispielsweise bei der Ultrafiltration gemäß US-A 4 369 266 etwa 30 % des ursprünglichen PFOS-Gehalts in den handelsüblichen Dispersionen. In speziellen Fällen kann der PFOS-Restgehalt auf weniger als 10 % verringert werden, jedoch ist das Verfahren im allgemeinen ökonomisch nicht sinnvoll: Zur Erzielung einer derartigen Verringerung muß man in der aufzukonzentrierenden Dispersion Wasser und einen nichtionischen Emulgator nachschleusen. Dadurch werden die Laufzeiten unvertretbar lang.

Bei der nachfolgenden Verwendung dieser Dispersionen kann das PFOS in die Umwelt gelangen, zum Beispiel mit dem unvermeidlichen Abwasser zur Reinigung der Einrichtungen und mit einem Aerosol in die Atmosphäre. Bei der Herstellung von Beschichtungen verstärkt sich letztere Emission noch, da PFOS und ihr Ammoniumsalz hochflüchtig sind. Außerdem werden PFOS und ihre Salze bei den normalerweise angewandten Sintertemperaturen von 350 bis 450 °C durch Decarboxylierung zu Fluorkohlenwasserstoffen zersetzt, die ein großes Erwärmungspotential für das Klima ("Treibhauseffekt") aufweisen.

Das vorliegende Verfahren liefert feststoffreiche Dispersionen mit einem Feststoffgehalt von 10 bis 70 Gew.-%, die im wesentlichen PFOS-frei sind. Im Rahmen der vorliegenden Erfindung ist unter "im wesentlichen frei" ein Gehalt von weniger als 100 ppm, bevorzugt weniger als 50 ppm, besonders bevorzugt weniger als 25 ppm und insbesondere weniger als 5 ppm zu verstehen. Diese Werte beziehen sich nicht nur auf den Feststoffgehalt, sondern auf die gesamte Dispersion. Dies erreicht man durch Abtrennung von fluorierten Emulgatoren, zum Beispiel PFOS, aus Fluorpolymerdispersionen, wie zum Beispiel PTFE-, Fluorthermoplast- oder Fluorelastomerdispersionen, mittels Anionenaustausch, indem man nämlich der Fluorpolymerdispersion einen nichtionischen Emulgator zusetzt und diese stabilisierte Dispersion mit einem basischen Anionenaustauscher in Berührung bringt. Dieses Verfahren arbeitet ohne Blockierung oder Verstopfung des Ionenaustauscherbetts durch koagulierte Latexteilchen. Die erhaltene Dispersion kann gegebenenfalls aufkonzentriert werden.

Als Fluorpolymerdispersionen eignen sich im Rahmen der vorliegenden Erfindung Dispersionen von Homopolymeren und Copolymeren aus einem oder mehreren fluorierten Monomeren, wie zum Beispiel TFE, VDF oder CTFE oder anderen fluorierten Olefinen mit 2 bis 8 Kohlenstoffatomen, perfluorierten Olefinen mit 2 bis 8 Kohlenstoffatomen, wie zum Beispiel HFP, fluorierten Ethern, insbesondere perfluorierten Vinylalkylethern mit Alkylteilen mit 1 bis 6 Kohlenstoffatomen, wie zum Beispiel Perfluor(n-propylvinyl)ether und Perfluor(methylvinyl)ether. Als Comonomere kommen auch nichtfluorierte Olefine in Betracht, zum Beispiel Ethylen und Propylen. Die Erfindung soll derartige Dispersionen unabhängig davon, ob das erhaltene Fluorpolymer aus der Schmelze verarbeitbar ist oder nicht, umfassen. Der Feststoffgehalt der Dispersion beträgt 10 bis 70 Gew.-%.

Die Latexteilchen haben in der Regel einen submikroskopischen Durchmesser von weniger als 400 nm und vorzugsweise von 40 bis 400 nm. Kleinere Teilchengrößen lasen sich mit der sogenannten "Mikroemulsionspolymerisation" erhalten. Die Latexteilchen sind in kolloidchemischem Sinne anionisch stabilisiert. Die anionische Stabilisierung wird durch anionische Endgruppen, meistens COOH-Gruppen, und durch den anionischen Emulgator, wie zum Beispiel PFOS, bewirkt. Derartige anionisch stabilisierte Dispersionen koagulieren in einem Anionenaustauscherbett rasch und blockieren somit das Ionenaustauscherbett. Dies ist auf den Zusammenbruch der elektrischen Doppelschicht an den Ionenaustauscherzentren zurückzuführen. Daher wird die Behandlung einer anionisch stabilisierten Dispersion mit einem Anionenaustauscher insbesondere für höhere Konzentrationen als technisch nicht sinnvoll erachtet.

Die Beeinträchtigung oder Verstopfung des Ionenaustauscherbetts wird schon bei Konzentrationen beobachtet, die 1/1000 der Polymerrohdispersionen, das heißt der Dispersion nach der Polymerisation, betragen.

Für die Wahl eines geeigneten Ionenaustauschers ist die Beobachtung hilfreich, daß der pKa-Wert der mit dem Gegenion des Anionenaustauschers korrespondierenden Säure höher als der pKa-Wert der anionischen Endgruppen des Polymers sein muß. Der Anionenaustauscher weist vorzugsweise ein mit einer Säure mit einem pKa-Wert von mindestens 3 korrespondierendes Gegenion auf.

Demgegenüber wird bei einem Anionenaustauscher in der SO₄²⁻oder Cl⁻-Form selbst mit Dispersionen von Copolymeren aus TFE und HFP, sogenanntem "FEP", und aus TFE und PPVE, sogenanntem "PFA", nach längeren Zeiträumen Koagulation beobachtet. Diese beiden Copolymere weisen stark saure Endgruppen auf. Die Bildung derartiger Endgruppen wird in "Modern Fluoropolycners", John Scheirs (Herausgeber), John Wiley & Sons, Chichester (1997), Seiten 227 bis 288, 244, erklärt. Bei der Verarbeitung von TFE-Ethylen- oder VDF-Copolymerdispersionen werden Ionenaustauscherbetten unter derartigen Bedingungen praktisch sofort blockiert oder verstopft.

Daher wird der Anionenaustausch zu Beginn in einer im wesentlichen basischen Umgebung durchgeführt. Vorzugsweise wird das Ionenaustauscherharz in die OH⁻-Form überführt, jedoch kommen auch mit schwachen Säuren korrespondierende Anionen wie Fluorid oder Oxalat in Betracht. Diese Anionen liegen im allgemeinen in der Dispersion vor und stammen aus der Polymerisationsformulierung.

Die spezielle Basizität des verwendeten Anionenaustauschers ist nicht kritisch. Stark basische Harze sind aufgrund der beobachteten höheren Effizienz bei der PFOS-Abtrennung bevorzugt. Die wirksame Abtrennung von PFOS aus den Dispersionen hängt von den Ionenaustauschbedingungen ab.

Bei schwach basischen Ionenaustauscherharzen bricht PFOS früher durch. Ähnliches gilt für höhere Durchflußraten.

Die Durchflußrate ist nicht kritisch, man kann Standard-Durchflußraten anwenden. Die Strömung kann aufwärts oder abwärts gerichtet sein.

Der Ionenaustausch kann auch diskontinuierlich durchgeführt werden, indem man die Dispersion mit dem Ionenaustauscherharz in einem Behälter schwach rührt. Danach wird die Dispersion abfiltriert. Durch Anwendung der vorliegenden Erfindung wird bei diskontinuierlicher Fahrweise die Koagulation auf ein Minimum reduziert.

Nichtionische Emulgatoren werden in "Nonionic Surfactants", M. J. Schick (Herausgeber), Marcel Dekker, Inc., New York 1967, ausführlich beschrieben.

Die Wahl des nichtionischen Emulgators ist auch nicht kritisch. Hierfür kommen Alkylarylpolyethoxyalkohole, Alkylpolyethoxyalkohole oder ein beliebiger anderer nichtionischer Emulgator in Betracht. Dies stellt einen großen Vorteil dar, da bei der Abtrennung von PFOS aus handelsüblichen Dispersionen die Formulierung der eingesetzten Dispersionen im wesentlichen unverändert bleibt.

Hinsichtlich der Effektivität der PFOS-Abtrennung, den Durchflußraten oder der Blockierung des Ionenaustauscherbetts konnten bei Verwendung von nichtionischen Tensiden, zum Beispiel vom Alkylarylpolyethoxyalkohol-Typ, zum Beispiel Triton™ X100, oder vom Alkylpolyethoxyalkohol-Typ, zum Beispiel GENAPOL™ X 080, keine Unterschiede festgestellt werden.

Die PFOS-Abtrennung wird vorzugsweise mit Rohdispersionen aus der Polymerisation durchgeführt. Derartigen Dispersionen, die im allgemeinen einen Feststoffgehalt von 15 bis 30 Gew.-% aufweisen, setzt man eine so große Menge an nichtionischem Emulgator zu, daß die Dispersion während der nachfolgenden Verarbeitung, wie zum Beispiel der Aufkonzentrierung, stabil ist. Hierfür reicht im allgemeinen eine Menge an nichtionischem Emulgator von 0,5 bis 15 Gew.-% und vorzugsweise von 1 bis 5 Gew.-% aus. Diese Prozentangaben beziehen sich auf den Feststoffgehalt der Dispersion. Nach der PFOS-Abtrennung können die Dispersionen nach üblichen Verfahren aufkonzentriert werden, wie zum Beispiel durch Ultrafiltration oder thermische Aufkonzentrierung. Vorteilhafterweise ist die Konzentration des nichtionischen Emulgators im Endprodukt nicht viel höher als in vergleichbaren handelsüblichen Produkten. Durch die Abwesenheit von PFOS bei diesen Verfahren wird die Aufkonzentrierung nicht beeinträchtigt, das heißt bei der thermischen Aufkonzentrierung und bei der Ultrafiltration bildet sich nicht mehr Koagulat als in Gegenwart von PFOS.

Die Abtrennung von PFOS mittels Anionenaustausch kann auch mit bereits aufkonzentrierten Dispersionen mit einem Feststoffgehalt von bis zu 70 Gew.-% durchgeführt werden. Wegen der höheren Viskosität und Dichte derartiger Dispersionen ist dieses Verfahren jedoch technisch aufwendiger. In diesem Fall wird der Ionenaustausch vorzugsweise in Aufstromfahrweise betrieben, um Schwierigkeiten aufgrund des Schwebens des Ionenaustauscherbetts zu vermeiden. Die hohe Viskosität erlaubt meist keine hohen Durchflußraten. Für derartige feststoffreiche Dispersionen erscheint die diskontinuierliche Fahrweise vorteilhafter.

Zur PFOS-Abtrennung setzt man der Dispersion in der Regel unter schwachem Rühren 1-5 Gew.-% an nichtionischem Emulgator zu und führt sie über den Anionenaustauscher. Der Anionenaustauscher kann mit einer Lösung von nichtionischem Emulgator, wie er bei der dem Austausch zu unterwerfenden Dispersion verwendet wird, vorbehandelt werden. Das Anionenaustauscherharz wird vorzugsweise in die OH⁻-Form gebracht. Hierzu bringt man das Anionenaustauscherharz mit einer NaOH-Lösung in Berührung.

In der Regel verwendet man für den Ionenaustausch Dispersionen ohne Einstellung des pH-Werts, jedoch kann man den pH-Wert zur Verbesserung der kolloidalen Stabilität der Dispersion auch durch Zusatz einer Base wie wäßriger Ammoniak- oder Natriumhydroxidlösung erhöhen. Ein pH-Wert im Bereich von 7 bis 9 ist ausreichend. Der erhöhte pH-Wert nimmt keinen großen Einfluß auf die Effizienz der PFOS-Abtrennung. Es wird angenommen, daß dies darauf zurückzuführen ist, daß die PFOS nicht nur ausgetauscht, sondern auch am Ionenaustauscherharz stark absorbiert wird.

Danach werden die ionenausgetauschten Dispersionen aufkonzentriert, vorzugsweise durch thermische Aufkonzentrierung oder Ultrafiltration. Es konnte keine Beeinträchtigung dieser Verfahren festgestellt werden. Außerdem bleiben die Endverbraucherverarbeitung und die Endanwendungseigenschaften für derartige erfindungsgemäße Dispersionen unverändert.

Der Anionenaustausch in Gegenwart eines nichtionischen Emulgators ohne Blockierung des Ionenaustauscherbetts kann erfolgreich zur Abtrennung eines beliebigen anderen, in einem beliebigen Polymerisationsverfahren eingesetzten anionischen Emulgators angewandt werden.

Das in Rede stehende Verfahren kommt auch für alle Fluorpolymer-Rohdispersionen, wie zum Beispiel Dispersionen von PFA, FEP, THV (THV ist ein Terpolymer aus TFE, HFP und VDF), ET (ET ist ein Copolymer aus TFE und Ethylen), TFE/P (ein Copolymer aus TFE und Propylen), Copolymeren von VDF und HFP sowie Homopolymeren oder Copolymeren, die andere fluorierte Olefine oder Vinylether enthalten, in Betracht. Diese Polymere werden in der oben zitierten Druckschrift "Modern Fluoropolymers" ausführlich beschrieben.

Bei der Aufarbeitung gemäß US-A 5 463 021 wird unter anderem eine Behandlung von THV-Rohdispersionen mittels eines Ionenaustauschs als ein Aufarbeitungsschritt beschrieben. Dabei handelt es sich jedoch um einen Kationenaustausch zur Abtrennung von Manganionen, die aus dem als Polymerisationsinitiator verwendeten Permanganat stammen. Dabei wird die stabilisierende elektrische Doppelschicht nicht beeinflußt, da die Latexteilchen anionisch stabilisiert sind.

Die Erfindung wird nun anhand der folgenden Beispiele näher erläutert.

### Experimentelle Angaben:

Alle Prozentangaben beziehen sich auf das Gewicht, sofern nicht anders vermerkt.

### Bestimmung von PFOS

Die quantitative Bestimmung des PFOS-Gehalts der dem Anionenaustausch unterzogenen Dispersion kann nach der Methode gemäß "Encyclopedia of Industrial Chemistry Analysis", Band 1, Seiten 339 bis 340, Interscience Publishers, New York, NY, 1971, und EP-A 194 690 erfolgen.

Bei einer anderen zur Anwendung kommenden Methode wird das PFOS in den Methylester überführt und der Estergehalt gaschromatographisch unter Verwendung eines internen Standards analysiert. Bei letzterer Methode liegt die Nachweisgrenze für PFOS bei 5 ppm. Diese Methode wurde in den folgenden Beispielen angewandt.

### Anionenaustausch

Es wurde mit Standardgeräten gearbeitet. Die Säulenabmessungen betrugen 5 x 50 cm. Als stark basisches Anionenaustauscherharz wurde AMBEELITE™ IRA 402 mit einer Kapazität von 1,2 meq/ml verwendet (AMBERLITE ist ein Warenzeichen von Rohm & Haas). Das Bettvolumen betrug in der Regel 400 ml. Der Ionenaustauscher wurde mit NaOH-Lösung in die OH⁻-Form gebracht. Der Austauscher wurde mit einer 5%igen Lösung des nichtionischen Emulgators vorbehandelt. Der Ionenaustausch erfolgte bei Raumtemperatur. Die Versuche wurden mit den in Tabelle 1 aufgeführten unterschiedlichen Durchflußraten durchgeführt. Der nichtionische Emulgator wurde den Dispersionen in Form einer 10%igen Lösung zugesetzt. Der Gehalt wurde entsprechend den Angaben in Tabelle 1 variiert. Die Werte beziehen sich auf den Polymergehalt. Die technische Durchführbarkeit dieses Verfahrens wird als erreicht erachtet, wenn mindestens 5 % der theoretischen Kapazität des eingesetzten Ionenaustauscherharzes von der PFOS-haltigen Dispersion genutzt werden, ohne daß das Bett blockiert wird und ohne daß die PFOS durchbricht.

Dabei wurden die folgenden nichtionischen Tenside verwendet:
NIS 1: Octylphenoxypolyethoxyethanol (Handelsprodukt TRITON™ X 100, TRITON ist ein Warenzeichen der Union Carbide Corp.).
NIS 2: Ethoxylat eines langkettigen Alkohols (Handelsprodukt GENAPOL™ X 080, GENAPOL ist ein Warenzeichen der Hoechst AG).

### Beispiele 1 bis 7

Alle Versuche wurden mit AMBERLITE IRA 402 in der OH⁻-Form durchgeführt. Die Vorbehandlung des Anionenaustauscherharzes mit einer wäßrigen Lösung des nichtionischen Tensids wurde gemäß Tabelle 1 verändert.

Die Fluorpolymerdispersion wurde durch Homopolymerisation von TFE gemäß EP-B 30 663 erhalten. Der Feststoffgehalt der verwendeten Rohdispersion beträgt etwa 20 % und die mittlere Teilchengröße beläuft sich auf etwa 200 bis 240 nm. Der pH-Wert beträgt 7. Die Menge und Art des der Rohdispersion zugesetzten nichtionischen Emulgators wurde gemäß Tabelle 1 geändert.

Der PFOS-Gehalt der Dispersion beträgt etwa 0,13 Gew.-% (was 3,14 mmol/kg Dispersion entspricht). Dies entspricht 2,7 ml Ionenaustauscherharz pro kg Rohdispersion. Beispiel 3 zeigt, daß 54 ml des Gesamtvolumens von 400 ml Ionenaustauscherharz verbraucht werden. Somit belief sich die zur Verfügung gestellte Ionenaustauschkapazität für alle Beispiele auf einen mehr als 5-fachen Überschuß.

Die experimentellen Angaben gemäß Tabelle 1 zeigen verschiedene Durchflußraten. Während eines gegebenen Versuchs wurden keine Änderungen der Durchflußrate beobachtet. Das deutet darauf hin, daß das Ionenaustauscherbett nicht blockiert wurde. Die Laufzeit der Versuche betrug bis zu 67 h ohne Unterbrechung. Alle Beispiele ergeben Dispersionen mit PFOS-Gehalten unter 5 ppm, der analytischen Nachweisgrenze der angewandten Methode.

**TABELLE 1**

| **Beispiel Nr.** | 1 | 2 | 3 | 4 | 5 | 6 | 7 |
|---|---|---|---|---|---|---|---|
| Ionenaustauscherharz, ml | 400 ml | 400 ml | 400 ml | 4 parallele Säulen, jeweils 400 ml | 4 parallele Säulen, jeweils 400 ml | 400 ml | 400 ml |
| Vorbehandlung des Ionenaustauscherharzes mit einer wäßrigen Lösung von | 1 Gew.-% 1 | 5 Gew.-% | 3 Gew.-% | 5 Gew.-% | 5 Gew.-% | 5 Gew.-% | 1 Gew.-% |
| | NIS | NIS 1 | NIS 1 | NIS 1 | NIS 2 | NIS 2 | NIS 2 |
| | | | | | | | |

| Rohdispersion: | | | | | | | |
|---|---|---|---|---|---|---|---|
| Feststoffgehalt | 22,7% | 22,6% | 22,7% | 22,7% | 22,5% | 23% | 22,8% |
| PFOS-Gehalt | 0,132% | 0,130% | 0,132% | 0,136% | 0,138% | 0,138% | 0,136% |
| | | | | | | | |

| Rohdispersion | | | | | | | |
|---|---|---|---|---|---|---|---|
| Stabilisiert mit*) | 1% NIS 1 | 3% NIS 1 | 4% NIS 1 | 5% NIS 1 | 5% NIS 2 | 4% NIS 2 | 1% NIS 2 |
| Übergeführte Menge | 5 kg | 19 kg | 20 kg | 40 kg | 50 kg | 18 kg | 8 kg |
| Durchflußrate | 0,5 l/h | 0,6 l/h | 0,3 l/h | 0,6 l/h | 0,6 l/h | 0,6 l/h | 0,5 l/h |
| Laufzeit | 10 h | 35 h | 67 h | 17h | 21 h | 30 h | 16 h |
| | | | | | | | |
| Blockierung ja/nein | Nein | Nein | Nein | Nein | Nein | Nein | Nein |
| | | | | | | | |

| Ionenausgetauschte Dispersion | | | | | | | |
|---|---|---|---|---|---|---|---|
| PFOS-Gehalt | < 5 ppm | < 5 ppm | < 5 ppm | < 5 ppm | < 5 ppm | < 5 ppm | < 5 ppm |
| | | | | | | | |
| | *) bezogen auf den Feststoffgehalt der Dispersion | | | | | | |

### Beispiel 8

800 ml AMBERLITE IRA 402 (OH⁻-Form, vorbehandelt mit einer 5%igen Lösung von NIS 1) wurden langsam einem Rührkessel mit 20 Liter Dispersion, die der in den Beispielen 1 bis 7 verwendeten Dispersion ähnlich war, aber durch Ultrafiltration aufkonzentriert worden war (Feststoffgehalt: 52,5 %, PFOS-Gehalt: 0,065 %, NIS-1-Gehalt: 5 %, bezogen auf den Polymergehalt), zugesetzt. Nach 8 h schwachem Rühren bei Raumtemperatur wurde der Anionenaustauscher abfiltriert und der PFOS-Gehalt der Dispersion analysiert, was ein Ergebnis von weniger als 5 ppm PFOS ergab.

### Beispiel 9

Eine PFA-Rohdispersion wurde analog den Beispielen 1 bis 7 gereinigt. Es wurden 400 ml AMBERLITE IRA 402 (OH⁻-Form, vorbehandelt mit einer 1%igen Lösung von NIS 2) verwendet. Die PFA-Dispersion (1500 ml, Feststoffgehalt 20 %) wurde mit 5 % NIS 2, bezogen auf den Feststoffgehalt der Dispersion, stabilisiert. Diese Dispersion enthielt 0,066 % PFOS und wies einen pH-Wert von 4 auf. Die Dispersion wurde mit einer Durchflußrate von 100 ml/h über das Anionenaustauscherbett geführt. Dies entspricht einer Laufzeit von 15 h. Es wurde keine Blockierung des Betts beobachtet, und die erhaltene Dispersion wies einen PFOS-Gehalt < 5 ppm auf.

### Beispiel 10

Beispiel 9 wurde mit einer mit 5 Gew.-% NIS 2 stabilisierten FEP-Rohdispersion (Feststoffgehalt 20 %, PFOS-Gehalt 0,08 %) wiederholt. Der Ionenaustausch ergab eine FEP-Dispersion mit < 5 ppm PFOS. Es wurde keine Blockierung des Betts beobachtet.

### Beispiel 11

Beispiel 9 wurde mit einer THV-Dispersion mit einem Feststoffgehalt von 20 % und einer mittleren Teilchengröße von 80 nm wiederholt. Vor dem Anionenaustausch wurde die Dispersion mit einem Kationenaustauscherharz behandelt, wie es in der US-A 5 463 021 beschrieben wird. Der Anionenaustausch ergab eine THV-Dispersion mit < 5 ppm PFOS, und es wurde keine Blockierung des Betts beobachtet.

## Patentansprüche

1. Verfahren zur Abtrennung von fluorhaltigem Emulgator aus einer wäßrigen Fluorpolymerdispersion, wobei der Feststoffgehalt der Dispersion 10 bis 70 Gew.-% beträgt, bei dem man der Dispersion zur Dispersionsscabilisierung eine wirksame Menge eines nichtionischen Emulgators zusetzt, die stabilisierte Dispersion zur weitgehenden Abtrennung von fluorhaltigem Emulgator mit einer wirksamen Menge eines Anionenaustauschers in Berührung bringt, die Dispersion vom Anionenaustauscher abtrennt und gegebenenfalls die so erhaltene Dispersion aufkonzentriert.

2. Verfahren nach Anspruch 1, **dadurch gekennzeichnet, daß** der Feststoffgehalt 15 bis 30 Gew.-% beträgt.

3. Verfahren nach einem oder mehreren der Ansprüche 1 bis 2, **dadurch gekennzeichnet, daß** man 0,5 bis 15 Gew.-% an nichtionischem Emulgator zusetzt, bezogen auf das Gewicht des Feststoffgehalts der Dispersion.

4. Verfahren nach Anspruch 3, **dadurch gekennzeichnet, daß** die Konzentration an nichtionischem Emulgator vorzugsweise 1 bis 5 %, bezogen auf den Feststoffgehalt, beträgt.

5. Verfahren nach einem oder mehreren der Ansprüche 1 bis 4, **dadurch gekennzeichnet, daß** der Anionenaustauscher ein mit einer Säure mit einem pKa-Wert von mindestens 3 korrespondierendes Gegenion aufweist.

6. Verfahren nach einem oder mehreren der Ansprüche 1 bis 5, **dadurch gekennzeichnet, daß** man den Anionenaustauscher in der OH-Form einsetzt.

## Claims

1. A process for removing fluorine-containing emulsifier from an aqueous fluoropolymer dispersion wherein the solids content of the dispersion is 10 to 70% by weight, said process comprises adding to the dispersion an effective amount of a nonionic emulsifier to stabilize the dispersion, bringing the stabilized dispersion into contact with an effective amount of an anion exchanger to extensively remove fluorine-containing emulsifier and separating the dispersion from the anion exchanger and optionally subjecting the resultant dispersion to concentration.

2. The process as claimed in claim 1, wherein the solids content is 15 to 30% by weight.

3. The process as claimed in one or more of claims 1 to 2, wherein 0.5 to 15% by weight of nonionic emulsifier are added, based on the weight of the solids content of the dispersion.

4. The process as claimed in claim 3, wherein the nonionic emulsifier concentration is preferably 1 to 5%, based on the solids content.

5. The process as claimed in one or more of claims 1 to 4, wherein the anion exchanger has a counterion corresponding to an acid with a pKa value of at least 3.

6. The process as claimed in one or more of claims 1 to 5, wherein the anion exchanger is used in the OH form.

## Revendications

1. Procédé pour la séparation d'un émulsifiant contenant du fluor d'une dispersion aqueuse de polymère fluoré ayant une teneur en matières solides de la dispersion est de 10 à 70% en poids, dans lequel on ajoute à la dispersion, pour la stabilisation de la dispersion, une quantité active d'un émulsifiant non ionique, on met en contact la dispersion stabilisée, pour la séparation dans une large mesure de l'émulsifiant contenant du fluor, avec une quantité active d'un échangeur d'anions, on sépare la dispersion de l'échangeur d'anions et on concentre le cas échéant la dispersion ainsi obtenue.

2. Procédé selon la revendication 1, **caractérisé en ce que** la teneur en matières solides est de 15 à 30% en poids.

3. Procédé selon l'une ou plusieurs des revendications 1 à 2, **caractérisé en ce qu'**on ajoute 0,5 à 15% en poids d'émulsifiant non ionique par rapport au poids de la teneur en matières solides de la dispersion.

4. Procédé selon la revendication 3, **caractérisé en ce que** la concentration en émulsifiant non ionique est de préférence de 1 à 5% par rapport à la teneur en matières solides.

5. Procédé selon l'une ou plusieurs des revendications 1 à 4, **caractérisé en ce que** l'échangeur d'anions présente un contre-ion correspondant à un acide présentant un pKa d'au moins 3.

6. Procédé selon l'une ou plusieurs des revendications 1 à 5, **caractérisé en ce qu'**on utilise l'échangeur d'anions sous forme OH.
